# DEMANDE DE BREVET EUROPEEN

(11) **EP 0 784 383 A2**
(43) Date de publication de la demande: **16.07.1997**
(21) Numéro de dépôt: 97200042.6
(22) Date de dépôt: 08.01.1997
(51) Int. Cl.: H04B 1/38, H04M 1/66

(54) **Appareil muni d'un boîtier amovible contenant un adaptateur permettant la lecture de cartes à puces aux formats différents**

(30) Priorité: 10.01.1996 FR 9600218
(71) Demandeur: Philips Electronics N.V., 5621 BA Eindhoven (NL)
(72) Inventeur: Jubert, Laurent, Société Civile S.P.I.D., 75008 Paris (FR)
(74) Mandataire: Caron, Jean

(57) **Abrégé**

L'invention présente un appareil, par exemple un téléphone portable, muni d'un lecteur de cartes à puce comportant un connecteur pouvant être mis en contact avec les bornes d'un circuit intégré présent sur une carte à puce conforme à un premier format dit format full-SIM, muni en outre d'un boîtier amovible destiné à être fixé en position de fonctionnement en vis-à-vis du lecteur de cartes à puce, muni enfin d'un adaptateur permettant l'introduction et la lecture d'une carte à puce conforme à un deuxième format dit format micro-SIM, caractérisé en ce que le boîtier amovible contient l'adaptateur, lequel adaptateur consiste en une cavité destinée à servir de réceptacle à une carte à puce conforme au format micro-SIM, en ce que le boîtier amovible comporte un dispositif de maintien en position de la carte à puce conforme au format micro-SIM dans la cavité, et en ce que la cavité et le dispositif de maintien en position sont configurés de sorte que les bornes du circuit intégré présent sur la carte micro-SIM soient placées en vis-à-vis du connecteur du lecteur de cartes à puce après insertion de ladite carte.

Application : Téléphones portables

## Description

La présente invention concerne un appareil, par exemple un téléphone portable, muni d'un lecteur de cartes à puce comportant un connecteur pouvant être mis en contact avec les bornes d'un circuit intégré présent sur une carte à puce conforme à un premier format dit format full-SIM, muni en outre d'un boîtier amovible destiné à être fixé en position de fonctionnement en vis-à-vis du lecteur de cartes à puce, muni enfin d'un adaptateur permettant l'introduction et la lecture d'une carte à puce conforme à un deuxième format dit format micro-SIM, Un tel appareil est connu du brevet européen n°0 556 970 A1.

Cet appareil comporte un adaptateur qui, lorsque disposé en mode de lecture d'une carte à puce conforme au format full-SIM, c'est-à-dire le format standard pour une carte à puce, est placé dans une cavité afin qu'il ne fasse pas obstacle au passage de la carte, et, lorsque disposé en mode de lecture d'une carte à puce conforme au format micro-SIM, c'est-à-dire une carte dont la surface est réduite à la surface nécessaire pour y apposer un circuit intégré, bascule au moyen d'une liaison pivot et plaque les bornes dudit circuit intégré contre le connecteur du lecteur de cartes à puce. La liaison pivot mise en oeuvre présente un inconvénient : lors du basculement de l'adaptateur, celui-ci fait saillie avec le corps de l'appareil et devient alors vulnérable aux chocs. Un choc transversal peut en effet briser certaines des parties formant la liaison pivot, désolidarisant ainsi irrémédiablement l'adaptateur de l'appareil.

La présente invention a pour but de remédier à cet inconvénient, en proposant un adaptateur qui s'intègre, sans faire saillie, au corps de l'appareil.

En effet, selon la présente invention, un appareil du type défini dans le paragraphe introductif est caractérisé en ce que le boîtier amovible contient l'adaptateur, lequel adaptateur consiste en une cavité destinée à servir de réceptacle à une carte à puce conforme au format micro-SIY, en ce que le boîtier amovible comporte un dispositif de maintien en position de la carte à puce conforme au format micro-SIM dans la cavité, et en ce que la cavité et le dispositif de maintien en position sont configurés de sorte que les bornes du circuit intégré présent sur la carte micro-SIM soient placées en vis-à-vis du connecteur du lecteur de cartes à puce après insertion de ladite carte.

Un mode de réalisation particulier de l'invention présente un appareil tel que décrit ci-dessus, caractérisé en ce que le dispositif de maintien en position est constitué d'une languette réalisée en un matériau doté d'un certaine élasticité, dont les extrémités sont solidaires du boîtier amovible et dont la forme est incurvée en direction de la cavité destinée à servir de réceptacle à une carte à puce conforme au format micro-SIM.

L'invention sera mieux comprise à l'aide de la description suivante d'un mode de réalisation, faite à titre d'exemple et en regard des dessins annexés, dans lesquels :
- la figure 1 est une représentation schématique d'un appareil mettant en oeuvre l'invention, et
- la figure 2 est une représentation schématique d'un boîtier amovible conforme à un mode de réalisation particulier de l'invention, et
- la figure 3 est une coupe partielle représentant schématiquement une partie d'un boîtier amovible conforme à un mode de réalisation particulier de l'invention.

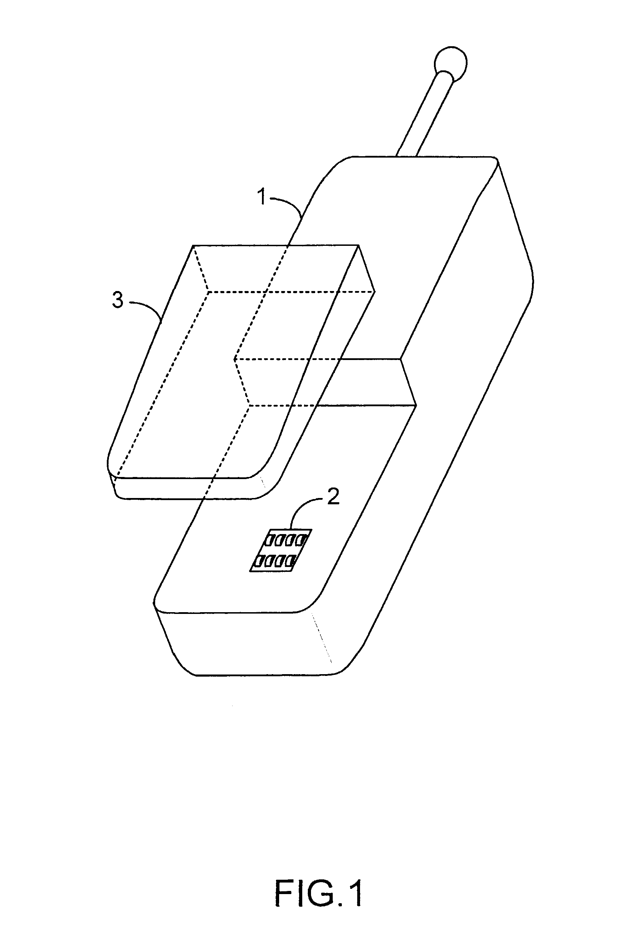

La figure 1 représente schématiquement un appareil 1, par exemple un téléphone portable, muni d'un lecteur de cartes à puce comportant un connecteur 2 pouvant être mis en contact avec les bornes d'un circuit intégré présent sur une carte à puce conforme à un premier format dit format full-SIM. L'appareil 1 est en outre muni d'un boîtier amovible 3, contenant par exemple une batterie servant à l'alimentation électrique dudit appareil 1. En position de fonctionnement, ce boîtier amovible 3 est fixé en vis-à-vis du lecteur de cartes à puce.

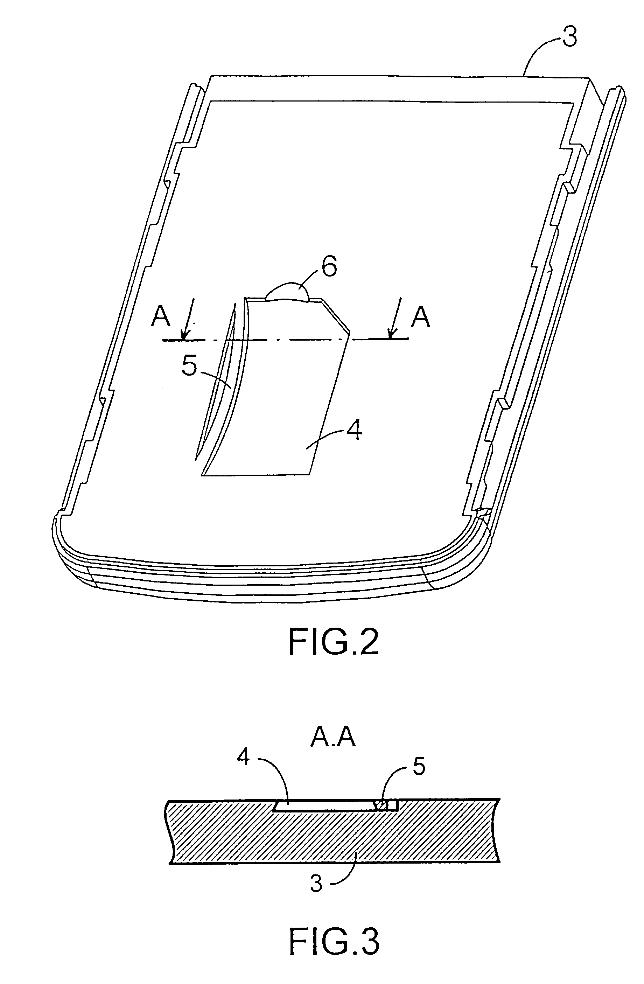

La figure 2 représente schématiquement ledit boîtier amovible 3, qui cotient l'adaptateur, lequel adaptateur consiste en une cavité 4 destinée à servir de réceptacle à une carte à puce conforme à un deuxième format dit format micro-SIM, Le boîtier amovible 3 comporte en outre un dispositif de maintien en position 5 de la carte à puce conforme au format micro-SIM dans la cavité 4. La cavité 4 et le dispositif de maintien en position 5 sont configurés de sorte que les bornes du circuit intégré présent sur la carte micro-SIM soient placées en vis-à-vis du connecteur 2 du lecteur de cartes à puce après insertion de ladite carte. Dans ce mode de réalisation particulier de l'invention, le dispositif de maintien en position 5 est constitué d'une languette réalisée en un matériau doté d'un certaine élasticité, comme par exemple un mélange d'ABS et de polycarbonate, languette dont les extrémités sont solidaires du boîtier amovible 3 et dont la forme est incurvée en direction de la cavité 4 destinée à servir de réceptacle à une carte à puce conforme au format micro-SIM. Un embrèvement 6 est placé à un bord de la cavité 4 afin de faciliter l'extraction d'une telle carte à puce.

La figure 3 est une coupe partielle suivant un axe A.A, dans laquelle on voit la section de la cavité 4, ainsi que celle de la languette constituant le dispositif de maintien en position 5. Celles ci présentent une forme biseautée dirigée vers l'intérieur de la cavité 4 afin de faciliter l'insertion et le maintien en position de la carte à puce conforme au format micro-SIM.

## Revendications

1. Appareil, par exemple un téléphone portable, muni d'un lecteur de cartes à puce comportant un connecteur pouvant être mis en contact avec les bornes d'un circuit intégré présent sur une carte à puce conforme à un premier format dit format full-SIM, muni en outre d'un boîtier amovible destiné à être fixé en position de fonctionnement en vis-à-vis du lecteur de cartes à puce, muni enfin d'un adaptateur permettant l'introduction et la lecture d'une carte à puce conforme à un deuxième format dit format micro-SIM, caractérisé en ce que le boîtier amovible comporte l'adaptateur, lequel adaptateur consiste en une cavité destinée à servir de réceptacle à une carte à puce conforme au format micro-SIM, en ce que le boîtier amovible comporte un dispositif de maintien en position de la carte à puce conforme au format micro-SIM dans la cavité, et en ce que la cavité et le dispositif de maintien en position sont configurés de sorte que les bornes du circuit intégré présent sur la carte micro-SIX soient placées en vis-à-vis du connecteur du lecteur de cartes à puce après insertion de ladite carte.

2. Appareil selon la revendication 1, caractérisé en ce que le dispositif de maintien en position est constitué d'une languette réalisée en un matériau doté d'un certaine élasticité, dont les extrémités sont solidaires du boîtier amovible et dont la forme est incurvée en direction de la cavité destinée à servir de réceptacle à une carte à puce conforme au format micro-SIM.
